# EUROPÄISCHE PATENTSCHRIFT

(11) **EP 3 299 076 B1**
(45) Veröffentlichungstag und Bekanntmachung des Hinweises auf die Patenterteilung: **08.12.2021**
(21) Anmeldenummer: 17173507.9
(22) Anmeldetag: 30.05.2017
(51) Int. Cl.: B01D 46/30, B01D 53/04

(54) **FILTERVORRICHTUNG MIT TRICHTERFÖRMIGEM HALTERUNGSTEIL**
FILTER DEVICE WITH A FUNNEL-SHAPED HOLDER PART
DISPOSITIF DE FILTRE COMPRENANT UNE PARTIE DE SUPPORT EN FORME D`ENTONNOIR

(30) Priorität: 23.09.2016 DE 202016005863 U
(43) Veröffentlichungstag der Anmeldung: 28.03.2018
(73) Patentinhaber: Prima Klima Trading CZ s.r.o., 33828 Radnice u Rokycany (CZ)
(72) Erfinder: Reeh, Gerhard, 33828 Radnice u Rokycany (CZ)
(74) Vertreter: Lehmann, Horst Michael

(56) Entgegenhaltungen:
- CN-Y- 201 386 015
- US-A1- 2006 101 999
- US-A1- 2012 219 462
- US-A1- 2013 036 908
- US-A1- 2015 283 490

## Beschreibung

### Die Erfindung betrifft eine Filtervorrichtung mit einem trichterförmigen Halterun gsteil.

Die im Markt verfügbaren Aktivkohleluftfilter sind als zylindrische Korbfilterpatronen oder als Aktivkohlekassetten verfügbar. Sie werden zur Reinigung von Küchenabluft, in der Automobilindustrie als Umluft- oder Zuluftfilter und allgemein zur Adsorption organischer Verbindungen in der Luft eingesetzt. Der Nachteil der zylindrischen Korbfilter ist das hohe Gewicht, lange Rüst- und Austauschzeiten und sie sind nicht beliebig erweiterbar. Sie werden meist saugseitig betrieben und können nicht einfach in ein bestehendes Abluftsystem integriert werden. Ein weiterer Nachteil der marktüblichen Aktivkohlefilterkassetten ist, dass die Aktivkohlebettstärke vorgegeben ist und nicht nachträglich erweitert werden kann.

Die US-Patentanmeldung US 2013 / 036 908 A1 beschreibt Vorrichtungen und Verfahren zum Reduzieren oder Eliminieren unerwünschter in der Luft befindlicher Substanzen, wie Gerüche, Bakterien, Viren, Pilze und Toxine. Ein Filter, der nanokristalline Metalloxid- oder Metallhydroxidteilchen enthält, kann in einer Luftbehandlungsvorrichtung wie einer bestehenden HVAC-Einheit, die in einem Gebäude und insbesondere in einem Haus oder einem tragbaren Luftprozessor oder Luftreiniger angeordnet ist, installiert werden. Die Luftbehandlungsvorrichtung umfasst ein Gebläse, das Luft, die verschiedene unerwünschte Substanzen enthält, aus der eingeschlossenen Umgebung zieht und durch eine Filtervorrichtung lenkt, die die nanokriatallinen Partikel enthält. Die unerwünschten Substanzen werden durch die nanokristallinen Partikel sorbiert, wodurch ein desodorisierter Luftstrom erzeugt wird, der dann in verschiedene Teile der eingeschlossenen Umgebung zurückgeleitet oder in die Atmosphäre abgelassen werden kann.

Die US-Patentanmeldung US 2015 / 283 490 A1 beschreibt ein modulares Inline-Luftfiltersystem für Rohrleitungen. Ein Gehäuse, das als Korpus mit einer oder mehreren Kappen ausgebildet ist, weist eine Einlassöffnung an einem ersten Ende und eine Auslassöffnung an einem zweiten Ende auf. Die Kappe und der Korpus können miteinander über eine Verbindung verbunden sein, die eine Dichtung mit einer abgestuften Querschnittskonfiguration enthält. Ein Satz Halteklammem kann verwendet werden, um die Kappe an dem Korpus zu befestigen. Eine oder mehrere austauschbare Filteranordnungen können in dem Gehäuse zum Filtern von Luft, die dort hindurchgeführt wird, angeordnet werden. Eine Filteranordnung kann eine Dichtung mit der abgestuften Querschnittskonfiguration zum Befestigen in dem Gehäuse und zum Abdichten der Verbindung zwischen Kappe und Korpus umfassen.

Die chinesische Patentanmeldung CN 201 386 015 Y beschreibt einen Trichter mit einem Filtersieb, das einen Trichterkörper umfasst, der mit einer oberen Öffnung und einer unteren Öffnung versehen ist. Die obere Öffnung ist größer als die untere Öffnung. Das Filtersieb ist in die oberen Öffnung eingebettet und die Größe des Filtersiebs ist auf die Größe der oberen Öffnung abgestimmt. Wenn der Trichter mit dem Filtersieb verwendet wird, kann das Filtersieb Ausfällungen in Flüssigkeit oder anderen Formen von Feststoffen filtern.

Die US-Patentanmeldung US 2006 / 101 999 A1 beschreibt ein Filterelement, insbesondere Innenraumfilter, zur stirnseitigen Anströmung, aufweisend mindestens eine flache Lage und mindestens eine gefaltete Lage, wobei die mindestens eine flache Lage mit der mindestens einen gefalteten Lage im Wechsel derart angeordnet ist, dass sich Kanäle mit offenem, insbesondere dreieckigem Querschnitt ergeben, dichte Verschlüsse jeweils der einer ersten Gruppe von Kanälen einerseits und dichte Verschlüsse der restlichen, nicht zu genannter Gruppe zählenden Kanäle einer zweiten Gruppe andererseits, derart, dass das zu filternde Fluid bei der Durchströmung des Filterelementes von einer Anströrnseite, gebildet durch eine Stirnseite des Filterelementes, zu einer Abströrnseite, gebildet durch dessen andere Stirnseite, eine der genannten Lagen, die zur Filterung des Fluids vorgesehen ist, durchtreten muss. Das Filterelement weist Mittel zur Abdichtung der Anströmseite von der Abströmseite im Einbauort des Filterelementes auf, wobei sowohl die mindestens eine flache Lage als auch die mindestens eine gefaltete Lage aus durchströmbaren Filtermedien bestehen, wobei an jeder den offenen Querschnitt bildenden Seite derjenigen Kanäle der ersten Gruppe, die vom Rand des Filterelementes beabstandet sind, ein Kanal der zweiten Gruppe benachbart ist, so dass die vollständige Fläche der Kanäle der ersten Gruppe bis auf Faltkanten der Kanäle vom Fluid durchströmbar ist.

Die US-Patentanmeldung US 2012 / 219 462 A1 beschreibt ein Reinigungsfilter, das in einem Luftreinigungsgerät bereitgestellt wird, um gasförmige Verunreinigungen (Geruch / chemische Substanzen) und Partikel (Staub, mikrobielle Partikel, allergene Partikel und dergleichen) zu filtern und die Filterleistung für vorbestimmte Verunreinigungen zu regenerieren oder wiederherzustellen. Das Reinigungsfilter weist ein Gasauffangelement und ein Partikelauffangelement auf. Mindestens eines von dem Gaseinfangelement und dem Partikelauffangelement umfasst: ein Einfangmaterial zum Einfangen einer vorbestimmten Verunreinigung in der Luft und ein Filtermaterialhalteelement, um das Filtermaterial so zu halten, dass es dem Luftströmungskanal gegenüberliegt, wobei eine Luftdurchlässigkeit sichergestellt ist. Das Filtermaterialhalteelement wird, wenn es von einem Hauptkörper der Reinigungsvorrichtung entfernt wird, einem Regenerationsprozess zum Regenerieren der Filterleistung des Filtermaterials ausgesetzt.

Es ist Aufgabe der Erfindung, eine Filtervorrichtung zum Filtern von Gas, insbesondere von Luft zur Verfügung zu stellen, welche universell montierbar ist und eine verbesserte Filterung des zu filternden Gases ermöglicht.

Diese Aufgabe wird durch eine Filtervorrichtung gemäß Anspruch 1 sowie durch ein Verfahren zur Montage einer Filtervorrichtung gemäß Anspruch 10 gelöst.

Ein trichterförmiges Halterungateil weist einen Anschluss zur Zuführung oder Abführung von Gas auf, wobei sich eine Wandung des Halterungsteils von dem Anschluss ausgehend in axialer Richtung trichterförmig aufweitet und eine Aufnahme für eine Filterkassette bildet. Die Filterkassette ist in die Aufnahme einsetzbar.

Die Aufnahme des trichterförmigen Halterungsteils ist dazu ausgebildet, eine mit Filtermaterial befüllte Filterkassette aufzunehmen. Wenn am Anschluss des Halterungsteils Gas zugeführt oder abgeführt wird, durchströrnt das zu filternde Gas die Filterkassette und wird gereinigt. Dabei werden beispielsweise organische Verbindungen am Filtermaterial adsorbiert. Das erfindungsgemäße Halterungsteil ermöglicht einen schnellen Einbau und ein schnelles Auswechseln der Filterkassette, so dass sich der Vorteil kurzer Rüst- und Austauschzeiten für die Filterkassette ergibt. Darüber hinaus kann wahlweise eine einzige Filterkassette oder mehrere aufeinander gestapelte Filterkassetten in die Aufnahme eingesetzt werden, so dass die Filterwirkung durch Reihenschaltung mehrerer Filterkassetten an die jeweiligen Bedürfnisse angepasst werden kann.

Ein weiterer Vorteil ist, dass sich das trichterförmige Halterungsteil zur Filterkassette hin aufweitet. Dadurch ist die Luftströmung durch die Filterkassette langsamer als am Anschluss, so dass durch die trichterförmige Formgebung die Kontaktzeit der zu filternden Luft mit dem Filtermaterial erhöht wird. Ein weiterer Vorteil ist, dass die Filterkassette dem Luftstrom eine vergleichsweise große zu durchströmende Fläche entgegensetzt, welche größer ist der Querschnitt des Anschlusses. Dadurch wird die Filterung des Luftstroms auf eine größere Fläche aufgeweitet, so dass pro Flächeneinheit der Filterkassette weniger Verunreinigungen adsorbiert werden müssen. Durch die vergrößerte Fläche wird die Beladung der Filterkassette mit Verunreinigungen pro Flächeneinheit verringert, so dass die Filterkassette weniger häufig als bisher austauscht werden muss.

Eine Filtervorrichtung entsprechend den Ausführungsformen der Erfindung umfasst eine Filterkassette, welche eine zumindest teilweise gasdurchlässige erste Stirnfläche, eine gegenüberliegende zumindest teilweise gasdurchlässige zweite Stirnfläche sowie eine umlaufende Randwandung aufweist, wobei innerhalb der Filterkassette Filtermaterial angeordnet ist. Darüber hinaus umfasst die Filtervorrichtung ein trichterförmiges Halterungsteil, welches einen Anschluss zur Zuführung oder Abführung von Gas aufweist, wobei sich eine Wandung des Halterungsteils von dem Anschluss ausgehend in axialer Richtung trichterförmig aufweitet und eine Aufnahme für die Filterkassette bildet. Die Filterkassette ist in die Aufnahme eingesetzt und ist durch die Aufnahme ringsum gehaltert, wobei die Randwandung der Filterkassette ringsum von einem Randbereich der Aufnahme umschlossen und gehaltert ist. Dabei ist die Filterkassette mittels mindestens eines Befestigungselements in axialer Richtung so gegen die Aufnahme des trichterförmigen Halterungsteils anpressbar, dass zwischen der Aufnahme und der Randwandung der Filterkassette eine im Wesentlichen gasdichte Abdichtung ausbildbar ist.

Die Filtervorrichtung umfasst das trichterförmige Halterungsteil und die in die Aufnahme des Halterungateils eingesetzte Filterkassette, Über den Anschluss des Halterungsteils kann Gas, insbesondere Luft, zugeführt oder abgeführt werden. Das zu reinigende Gas durchströmt die Filterkassette, wobei Verunreinigungen am Filtermaterial der Filterkassette adsorbiert werden. Die Filtervorrichtung bietet den Vorteil, dass die Filteirkassette in kurzer Zeit eingesetzt und ausgetauscht werden kann. Dadurch ergeben sich kurze Rüst- und Austauschzeiten. Ein weiterer Vorteil ist, dass durch die trichterförmige Aufweitung des Halterungsteils die Strömung im Bereich der Filterkassette langsamer ist als am Anschluss des Halterungsteils. Insofern wird die Filterkassette vergleichsweise langsam durchströmt, um auf diese Weise eine verlängerte Kontaktzeit zwischen den Verunreinigungen des Gssstroms und dem Filtermaterial zu erreichen. Dadurch wird die Filterwirkung verbessert. Darüber hinaus wird durch die trichterförmige Aufweitung erreicht, dass die Filterkassette dem Gasstrom eine größere Fläche entgegensetzt und somit eine im Vergleich zum Querschnitt des Anschlusses deutlich größere Fläche der Filterkassette mit einem verunreinigten Gasstrom beaufschlagt wird. Infolge der vergrößerten Fläche müssen pro Flächeneinheit weniger Verunreinigungen durch das Filtermaterial adsorbiert werden. Dadurch wird die Beladung des Filtermaterials mit Verunreinigungen verringert, was zur Folge hat, dass die Filterkassette vergleichsweise selten gewechselt werden muss. In die Aufnahme des Halterungsteils können wahlweise eine oder mehrere aufeinander gestapelte Filterkassetten eingesetzt werden. Dadurch kann die Filterleistung an den jeweiligen Bedarf angepasst werden. Als weiterer Vorteil ergibt sich ein vergleichsweise geringer Druckabfall über die Filterkassette hinweg. Durch diesen geringen Druckabfall wird die Möglichkeit geschaffen, beispielsweise mehrere Filterkassetten gestapelt hintereinander anzuordnen.

Die Filtervorrichtung kann einfach und flexibel montiert werden und auch nachträglich in ein bestehendes Luftrohrsystem eingebaut werden. Die Filtervorrichtung kann sowohl für saugseitigen oder für druckseitigen Betrieb verwendet werden. Wenn zusätzlich ein zweites trichterförmiges Halterungsteil verwendet wird, wobei die Filterkassette bzw. die Filterkassetten zwischen dem ersten und dem zweiten Halterungsteil gehaltert werden, kann die Filtervorrichtung als Inlinefilter verwendet werden. Die Filtervorrichtung kann daher sowohl als Saugfilter als auch als Inlinefilter eingesetzt werden.

Vorzugsweise ist die Filtervorrichtung zum Filtern eines Gases ausgebildet. Weiter vorzugsweise ist die Filtervorrichtung zum Filtern von Luft ausgebildet.

Vorzugsweise ist die Filterkassette von einem zu filternden Gas durchströmbar.

Vorzugsweise ist der Anschluss dazu ausgelegt, ein Rohr, einen Schlauch, ein Ansaugrohr, einen Ansaugschlauch oder ein Gebläse anzuschließen.

Vorzugsweise ist der Anschluss zur Zuführung oder Abführung von Gas an einem in axialer Richtung ersten Ende des trichterförmigen Halterungsteils angeordnet und die Aufnahme für die Filterkassette ist an einem in axialer Richtung zum ersten Ende entgegengesetzten Ende des trichterförmigen Halterungsteils angeordnet.

Vorzugsweise ist die Filterkassette in Form einer Scheibe ausgebildet. Weiter vorzugsweise ist die Filterkassette in Form einer Scheibe mit kreisförmigen oder polygonalen oder rechteckigen Stirnflächen ausgebildet.

Vorzugsweise ist der Durchmesser der Aufnahme für die Filterkassette um einen Faktor 2 bis 5 mal größer als der Durchmesser des Anschlusses. Vorzugsweise ist die Querschnittsfläche der Aufnahme für die Filterkassette 5 bis 15 mal größer als die Querschnittsfläche des Anschlusses.

Vorzugsweise entspricht die Innenkontur der Aufnahme der Außenkontur eines Randes der Filterkassette.

Vorzugsweise ist die eingesetzte Filterkassette rundum von einem Randbereich des trichterförmigen Halterungsteils umgeben.

Vorzugsweise erstreckt sich die umlaufende Randwandung vom Rand der ersten Stirnfläche zum Rand der zweiten Stirnfläche,

Vorzugsweise ist die Randwandung der Filterkassette durch die Aufnahme so gehaltert, dass ein zu filterndes Gas durch die Filterkassette hindurch strömt. Weiter vorzugsweise ist die Randwandung der Filterkassette durch die Aufnahme so gehaltert, dass bei Anlegen eines Unterdrucks an den Anschluss ein zu filterndes Gas durch die Filterkassette hindurch strömt. Weiter vorzugsweise ist die Filterkassette innerhalb der Filtervorrichtung so angeordnet, dass ein zu filterndes Gas durch die erste Stirnfläche, das Filtermaterial und die zweite Stirnfläche der Filterkassette strömt.

Vorzugsweise ist die Randwandung der Filterkassette in der Aufnahme so gehaltert, dass die Stirnflächen der Filterkassette im Wesentlichen senkrecht zu einer Gasströmung durch die Filtervorrichtung stehen.

Vorzugsweise ist die Höhe der Randwandung der Filterkassette kleiner als der Durchmesser der Stirnflächen der Filterkassette.

Vorzugsweise ist die erste Stirnfläche der Filterkassette parallel zur zweiten Stirnfläche angeordnet.

Vorzugsweise verjüngt sich die Randwandung der Filterkassette von einer Mitte des Randes in axialer Richtung zur ersten und zweiten Stirnfläche hin jeweils nach innen. Vorzugsweise ist die Randwandung der Filterkassette von einer Mitte des Randes in axialer Richtung zur ersten und zweiten Stirnfläche hin jeweils konisch nach innen zulaufend ausgebildet.

Vorzugsweise ist an mindestens einer von der ersten und der zweiten Stirnfläche der Filterkassette ein gasdurchlässiges Abdeckmaterial angebracht, das das Filtermaterial innerhalb der Filterkassette hält.

Vorzugsweise handelt es sich bei dem an den Stirnflächen angebrachten gasdurchlässigen Abdeckmaterial um mindestens eines von folgenden: ein Fasermaterial, ein Vliesmaterial, ein Vliesmaterial aus Polyethylenfasern, ein Spinnvlies, ein Mehrkomponenten-Spinnvlies.

Vorzugsweise ist das Abdeckmaterial auf eine jeweilige Stirnfläche der Filterkassette thermisch aufgeschweißt. Vorzugsweise steht das Abdeckmaterial gegenüber einer abzudeckenden Stirnfläche um einen gewissen Überstand nach außen über und deckt dadurch eine Kante zur Randwandung der Filterkassette ab. Vorzugsweise ist mittels des Abdeckmaterials eine Abdichtung zwischen dem trichterförmigen Halterungsteil und der Filterkassette herstellbar.

Vorzugsweise ist die Filterkassette mittels mindestens eines Befestigungselements an dem trichterförmigen Halterungsteil befestigbar. Weiter vorzugsweise ist die Filterkassette mittels einer oder mehrerer Schrauben oder Klammem an dem trichterförmigen Halterungsteil befestigbar.

Vorzugsweise handelt es sich bei dem Filtermaterial um mindestens eines von Aktivkohle und Kokosnussschale.

Vorzugsweise ist das trichterförmige Halterungsteil als Formteil ausgebildet. Vorzugsweise ist die Filterkassette als Scheibe mit kreisförmigen Stirnflächen und das trichterförmige Halterungsteil als rotationssymmetrisches Formteil ausgebildet. Vorzugsweise handelt es sich bei dem trichterförmigen Halterungsteil um ein Spritzgussteil. Vorzugsweise besteht das trichterförmige Halterungsteil aus einem Kunststoffmaterial. Vorzugsweise handelt es sich bei der Filterkassette um ein Spritzgussteil. Vorzugsweise besteht die Filterkassette aus einem Kunststoffmaterial.

Vorzugsweise umfasst die Filtervorrichtung ein zweites trichterförmiges Halterungsteil, welches einen zweiten Anschluss zur Zuführung oder Abführung von Gas aufweist, wobei sich eine Wandung des zweiten trichterförmigen Halterungsteils von dem zweiten Anschluss ausgehend in axialer Richtung trichterförmig aufweitet und eine zweite Aufnahme für eine Filterkassette bildet.

Vorzugsweise ist die Randwandung der Filterkassette durch die erste Aufnahme und durch die zweite Aufnahme ringsum gehaltert. Wenn die Filterkassette zwischen zwei Halterungsteilen gelagert ist, kann die Filtervorrichtung als Inlinefilter betrieben werden.

Vorzugsweise ist das erste trichterförmige Halterungsteil zu dem zweiten trichterförmigen Halterungsteil baugleich.

Vorzugsweise ist zwischen dem ersten trichterförmigen Halterungsteil und der Filterkassette und dem zweiten trichterförmigen Halterungsteil und der Filterkassette jeweils eine im Wesentlichen gasdichte Abdichtung ausbildbar.

Vorzugsweise ist der zweite Anschluss dazu ausgelegt, ein Rohr, einen Schlauch, ein Abführrohr, einen Abführschlauch oder ein Gebläse anzuschließen.

Vorzugsweise weist die Filtervorrichtung zusätzlich zu der Filterkassette eine oder mehrere weitere Filterkassetten auf, wobei die Filterkassetten gestapelt angeordnet sind, wobei eine Stirnfläche einer Filterkassette jeweils auf einer Stirnfläche einer benachbarten Filterkassette aufliegt.

Vorzugsweise umfasst die Filtervorrichtung ein zweites trichterförmiges Halterungsteil, welches einen zweiten Anschluss zur Zuführung oder Abführung von Gas aufweist, wobei sich eine Wandung des zweiten trichterförmigen Halterungsteils von dem zweiten Anschluss ausgehend in axialer Richtung trichterförmig aufweitet und eine zweite Aufnahme für eine äußerste der weiteren Filterkassetten bildet.

Es wird außerdem ein Verfahren zur Montage einer Filtervorrichtung beschrieben, ausgehend von einer Filterkassette, wobei innerhalb der Filterkassette Filtermaterial angeordnet ist, und ausgehend von einem trichterförmigen Halterungsteil, welches einen Anschluss zur Zuführung oder Abführung von Gas aufweist, wobei sich eine Wandung des Halterungsteils von dem Anschluss ausgehend in axialer Richtung trichterförmig aufweitet und eine Aufnahme für die Filterkassette bildet. Das Verfahren umfasst Einsetzen einer Filterkassette in die Aufnahme des trichterförmigen Halterungsteils, wobei die Filterkassette eine zumindest teilweise gasdurchlässige erste Stirnfläche, eine gegenüberliegende zumindest teilweise gasdurchlässige zweite Stirnfläche sowie eine umlaufende Randwandung aufweist und die Randwandung der Filterkassette ringsum von einem Randbereich der Aufnahme umschlossen und gehaltert wird, und Fixieren der Filterkassette in der Aufnahme des trichterförmigen Halterungsteils, wobei die Filterkassette mittels mindestens eines Befestigungselements in axialer Richtung so gegen die Aufnahme des trichterförmigen Halterungsteils angepresst wird, dass zwischen der Aufnahme und der Randwandung der Filterkassette eine im Wesentlichen gasdichte Abdichtung ausgebildet wird.

Es wird außerdem ein Verfahren zur Montage einer Filtervorrichtung beschrieben, ausgehend von einer Filterkassette, wobei innerhalb der Filterkassette Filtermaterial angeordnet ist, ausgehend von einem ersten trichterförmigen Halterungsteil, welches einen ersten Anschluss zur Zuführung oder Abführung von Gas aufweist, wobei sich eine Wandung des ersten Halterungsteils von dem ersten Anschluss ausgehend in axialer Richtung trichterförmig aufweitet und eine erste Aufnahme für die Filterkassette bildet, und ausgehend von einem zweiten trichterförmigen Halterungsteil, welches einen zweiten Anschluss zur Zuführung oder Abführung von Gas aufweist, wobei sich eine Wandung des zweiten Halterungsteils von dem zweiten Anschluss ausgehend in axialer Richtung trichterförmig aufweitet und eine zweite Aufnahme für die Filterkassette bildet. Das Verfahren umfasst Einsetzen einer Filterkassette in die erste Aufnahme des ersten trichterförmigen Halterungsteils, Aufstecken der zweiten Aufnahme des zweiten trichterförmigen Halterungsteils auf die in der ersten Aufnahme des ersten trichterförmigen Halterungsteils befindliche Filterkassette und Fixieren des ersten und des zweiten trichterförmigen Halterungsteils, wobei eine im Wesentlichen gasdichte Abdichtung zwischen den trichterförmigen Halterungsteilen und der Filterkassette ausgebildet wird.

Nachfolgend wird die Erfindung anhand eines in der Zeichnung dargestellten Ausführungsbeispiels weiter beschrieben. Es zeigen:
Fig. 1 eine Filtervorrichtung mit einem trichterförmigen Halterungsteil und einer Filterkassette, die als Saugfilter einsetzbar ist;
Fig. 2a eine Seitenansicht des trichterförmigen Halterungsteils;
Fig. 2b eine Draufsicht auf das trichterförmige Halterungsteil;
Fig. 2c eine Schrägbildansicht des trichterförmigen Halterungsteils;
Fig. 3a eine Schrägbildansicht einer Filterkassette;
Fig. 3b eine Draufsicht auf die Filterkassette;
Fig. 3c eine Seitenansicht der Filterkassette;
Fig. 4 eine Filtervorrichtung mit einem trichterförmigen Halterungsteil und drei Filterkassetten, die als Saugfilter einsetzbar ist;
Fig. 5 eine Filtervorrichtung mit einem trichterförmigen Halterungsteil, einer Filterkassette und einem weiteren trichterförmigen Halterungsteil, die als Inlinefilter einsetzbar ist;
Fig. 6 eine Filtervorrichtung mit einem trichterförmigen Halterungsteil, drei Filterkassetten und einem weiteren trichterförmigen Halterungsteil, die als Inlinefilter einsetzbar ist.

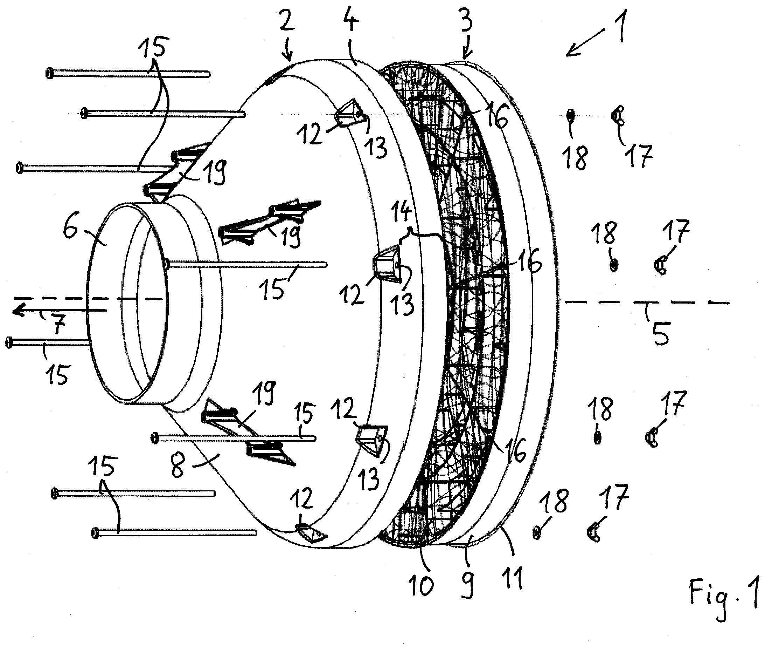

In Fig. 1 ist eine Filtervorrichtung 1 gezeigt, die beispielsweise als Saugfilter eingesetzt werden kann. Die Filtervorrichtung 1 umfasst ein trichterförmiges Halterungsteil 2 sowie eine Filterkassette 3, die mit einem Filtermaterial gefüllt ist. Dabei ist die Filterkassette 3 in eine entsprechende Aufnahme 4 des trichterförmigen Halterungsteils 2 einsetzbar und wird durch das trichterförmige Halterungsteil 2 gehaltert. Das zu reinigende Gas strömt in axialer Richtung durch die Filtervorrichtung 1, wobei die axiale Symmetrieachse 5 der Filtervorrichtung 1 in Fig. 1 als gestrichelte Linie dargestellt ist.

Das trichterförmige Halterungsteil 2 weist an einem in axialer Richtung ersten Ende einen Anschluss 6 für einen Schlauch oder ein Rohr auf, wobei der Anschluss 6 beispielsweise in Form eines Anschlussstutzens realisiert sein kann. Das an den Anschluss 6 angeschlossene Absaugrohr bzw. der Absaugschlauch kann beispielsweise mit einem Sauggebläse, einem Impeller oder einem Ventilator verbunden werden. Auf diese Weise kann Gas, insbesondere Luft, über die Anschlussöffnung des Anschlusses 6 in Richtung des Pfeils 7 aus der Filtervorrichtung 1 abgesogen werden. Ausgehend von dem Anschluss 6 weitet sich die Wandung des trichterförmigen Halterungsteils 2 im Bereich 8 in axialer Richtung trichterförmig nach außen auf und bildet die Aufnahme 4 für die Filterkassette 3. Die Aufnahme 4 befindet sich am zweiten Ende des trichterförmigen Halterungsteils 2, das in axialer Richtung betrachtet gegenüber vom ersten Ende des trichterförmigen Halterungsteils 2 angeordnet ist.

Im Beispiel von Fig. 1 ist die Filterkassette 3 als zylinderförmige Scheibe mit kreisförmigen Stirnflächen 10 und 11 ausgebildet, und dementsprechend weist auch die Aufnahme 4 für die Filterkassette 3 eine kreisförmige Kontur auf. Dabei ist der Durchmesser der Aufnahme 4 deutlich größer als der Durchmesser am Anschluss 6. Beispielsweise kann der Durchmesser der Aufnahme 4 etwa 1,5 bis 7 mal so groß wie der Durchmesser des Anschlusses 6 sein, weiter vorzugsweise 2 bis 5 mal so groß wie der Durchmesser des Anschlusses 6 sein. Die Aufnahme 4 ist zur Halterung der Filterkassette 3 ausgelegt. Hierzu wird die Filterkassette 3 so in die Aufnahme 4 eingesetzt, dass der Rand 9 der Filterkassette 3 ringsum vom Randbereich der Aufnahme 4 umschlossen wird. Die Innenkontur der Aufnahme 4 entspricht also etwa der Außenkontur des Randes 9 der Filterkassette 3. Entlang des Umfangs der Aufnahme 4 sind in regelmäßigen Abständen eine Mehrzahl von Einbuchtungen 12 vorgesehen, die jeweils Schraublöcher 13 zur Verschraubung der Filterkassette 3 mit dem trichterförmigen Halterungsteil 2 aufweisen. Diese Einbuchtungen 12 sind jeweils in einem gewissen Abstand 14 zum Rand der Aufnahme 4 angeordnet. Dabei liegt die Filterkassette 3 vorzugsweise ringsum auf den innerhalb der Aufnahme 4 angeordneten Schraublochdurchführungen auf, die sich an die Einbuchtungen 12 anschließen. Zur Verschraubung des trichterförmigen Halterungsteils 2 mit der Filterkassette 3 werden eine Mehrzahl von Gewindeschrauben 15 von der Seite des trichterförmigen Halterungsteils 2 aus durch die Schraublöcher 13 des trichterförmigen Halterungsteils 2 und die an entsprechenden Positionen angeordneten Schraublöcher 16 der Filterkassette 3 in axialer Richtung hindurchgeschoben und mittels der Flügelmuttern 17 verschraubt, wobei zwischen den Flügelmuttern 17 und der Filterkassette 3 Beilagscheiben 18 angeordnet sein können. An der Außenseite des sich trichterförmig aufweitenden Bereichs 8 des trichterförmigen Halterungsteils 2 sind insgesamt vier Abstandselemente 19 angebracht, die beim Einbau der Filtervorrichtung 1 an einer jeweiligen Einbauwand anliegen und so einen gewissen Abstand zwischen der Einbauwand und dem trichterförmigen Halterungsteil 2 herstellen.

Innerhalb der Filterkassette 3 ist das Filtermaterial angeordnet, das von dem zu reinigenden Gas durchströmt wird und dabei Verunreinigungen absorbiert. Bei dem Filtermaterial kann es sich beispielsweise um Aktivkohle handeln, welche beispielsweise in durchschnittlichen Partikelgrößen im Bereich von etwa 0,5 mm bis 5 mm, weiter vorzugsweise im Bereich von 2 mm bis 4 mm einsetzbar ist. Als Filtermaterial können beispielsweise auch Partikel aus Kokosnussschale eingesetzt werden, welche sich insbesondere zur Absorption von organischen Verunreinigungen des zu filternden Gases eignen. Das Innere der Filterkassette 2 ist durch eine Vielzahl von Trennwänden in eine Vielzahl von einzelnen Filterkammern unterteilt, die jeweils mit Filtermaterial gefüllt sind und separat von dem zu reinigenden Gas durchströmt werden. Dabei ist an den beiden Stirnflächen 10 und 11 der Filterkassette 3 jeweils ein gasdurchlässiges Abdeckmaterial angeordnet, das die Filterkammern an den Stirnflächen 10 und 11 gasdurchlässig abschließt und verhindert, dass das innerhalb der Filterkammern befindliche Filtermaterial aus den Filterkammern austreten kann. Bei dem Abdeckmaterial kann es sich beispielsweise um ein Vliesmaterial aus Kunststofffasern handeln, beispielsweise um ein Vliesmaterial aus Polyethylenfasern. Bei dem Abdeckmaterial kann es sich beispielsweise um ein Spinnvlies handeln, beispielsweise um ein Mehrkomponenten-Spinnvlies, welches durch Verwendung von zwei unterschiedlichen Fasern eine erhöhte Steifigkeit bietet. Vorzugsweise wird ein Vliesmaterial mit einer Dicke von beispielsweise 0,5 mm verwendet. Ein derartiges Vliesmaterial zeichnet sich durch hohe Gasdurchlässigkeit aus und kann von dem zu filternden Gas durchströmt werden. Sofern das Vliesmaterial aus Kunststofffasern hergestellt ist, kann das Vliesmaterial durch thermisches Anschweißen mit dem Rand 9 und den Trennwänden im Inneren der Filterkassette 3 verbunden werden. Dabei wird das Abdeckmaterial vorzugsweise etwas größer als die Stirnflächen 10 und 11 der Filterkassette 3 zugeschnitten, so dass das Abdeckmaterial über den Rand 9 der Filterkassette 3 hinaus etwas übersteht. Dadurch deckt das Vliesmaterial die Kante am Rand der Filterkassette 3 ab, so dass das Vliesmaterial nach dem Einsetzen der Filterkassette 3 in die Aufnahme 4 zwischen dem Rand 9 der Filterkassette 3 und der Aufnahme 4 angeordnet ist und beim Zusammenschrauben der Filtervorrichtung mittels der Gewindeschrauben 15 in axialer Richtung zwischen dem Rand 9 der Filterkassette 3 und der Aufnahme 4 so zusammengedrückt wird, dass zwischen der Aufnahme 4 und der Filterkassette 3 ein gasdichter Abschluss ausgebildet wird.

Bei dem in Fig. 1 gezeigten Beispiel ist die Filterkassette 3 als Scheibe mit kreisrunden Stirnflächen 10 und 11 ausgebildet. Dementsprechend weist auch die Aufnahme 4 für die Filterkassette 3 eine kreisrunde Innenkontur auf, um die Filterkassette 3 formschlüssig aufnehmen zu können. Daher ist das trichterförmige Halterungsteil 2 abgesehen von den Einbuchtungen 12 und den Abstandselementen 19 als rotationssymmetrisches Formteil ausgebildet, welches rotationssymmetrisch um die axiale Symmetrieachse 5 ausgebildet ist.

Die Filterkassette 3 muss allerdings nicht notwendigerweise eine kreisförmige Stirnfläche aufweisen. Die Filterkassette 3 könnte ebenso eine rechteckige, quadratische oder polygonale Stirnfläche aufweisen. In diesem Fall würde die Kontur der Aufnahme 4 der Kontur der Filterkassette 3 entsprechen, so dass sich in diesem Fall eine quadratische, rechteckige oder polygonale Aufnahme 4 ergeben würde. Auch in diesem Fall würde sich die Wandung des trichterförmigen Halterungsteils 2 vom Anschluss 6 aus trichterförmig zur Aufnahme 4 hin aufweiten. Allerdings wäre das Halterungsteil 2 in diesem Fall nicht rotationssymmetrisch, sondern lediglich drehsymmetrisch ausgebildet.

Das trichterförmige Halterungsteil 2 kann beispielsweise aus Metall, Kunststoff oder Keramik bestehen. Vorzugsweise ist das trichterförmige Halterungsteil 2 als Kunststoffformteil ausgebildet, welches beispielsweise mittels eines Spritzgussverfahrens herstellbar ist.

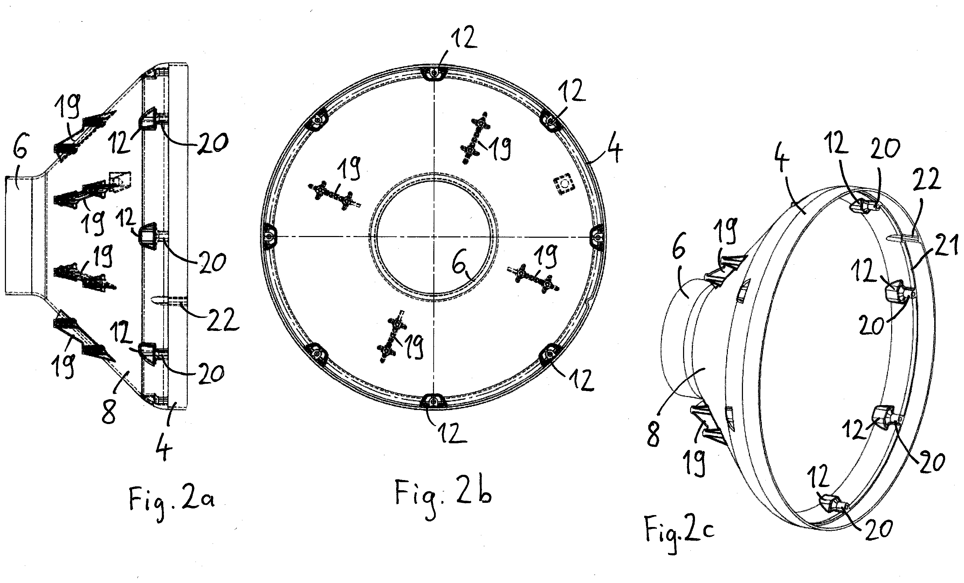

Fig. 2a zeigt eine Seitenansicht, Fig. 2b eine Draufsicht und Fig. 2c eine Schrägbildansicht des trichterförmigen Halterungsteils 2. Es ist zu erkennen, dass sich das trichterförmige Halterungsteil 2 von dem Anschluss 6 ausgehend im Bereich 8 trichterförmig zur kreisförmigen Aufnahme 4 aufweitet, wobei die Aufnahme 4 zur Halterung der Filterkassette 3 ausgebildet ist. Dabei weist das trichterförmige Halterungsteil 2 im Bereich des Anschlusses 6 einen Durchmesser von 10, 12,5 oder 15 cm auf und weitet sich zur Aufnahme 4 hin bis zu einem Durchmesser von 36,5 cm auf. Dabei ist das trichterförmige Formteil 2 als zur axialen Symmetrieachse 5 rotationssymmetrisches Formteil ausgebildet. In den Fig. 2a, 2b und 2c sind außerdem die Einbuchtungen 12 mit den Schraublöchern 13 zu erkennen, und in Fig. 2c ist zu erkennen, dass die Schraublöcher durch Schraubhülsen 20 hindurch verlaufen. Wenn die Filterkassette 3 in die Aufnahme 4 des trichterförmigen Halterungsteils 2 eingesetzt wird, liegt die Filterkassette 3 auf den Enden der Schraubhülsen 20 und außerdem auf einer im Inneren der Aufnahme 4 kreisförmig umlaufenden Auflagestufe 21 auf. Dabei entspricht die Außenkontur der Filterkassette 3 der Innenkontur der Aufnahme 4, so dass der Rand 9 der Filterkassette ringsum vom Randbereich der Aufnahme 4 umschlossen und gehaltert wird. An der Innenseite der Aufnahme 4 kann eine Positioniernase 22 vorgesehen sein, die dazu ausgelegt ist, in eine entsprechende Positionierrille an der Außenseite der Filterkassette 3 einzugreifen, um eine vorgebbare Orientierung der Filterkassette 3 relativ zur Aufnahme 4 zu erreichen. Darüber hinaus sind in den Fig. 2a bis 2c die Abstandselemente 19 zu erkennen, die an den sich trichterförmig aufweitenden Bereich 8 angeformt sind und einen gewissen Mindestabstand zwischen einer Einbauwandung und dem sich trichterförmig aufweitenden Bereich 8 gewährleisten.

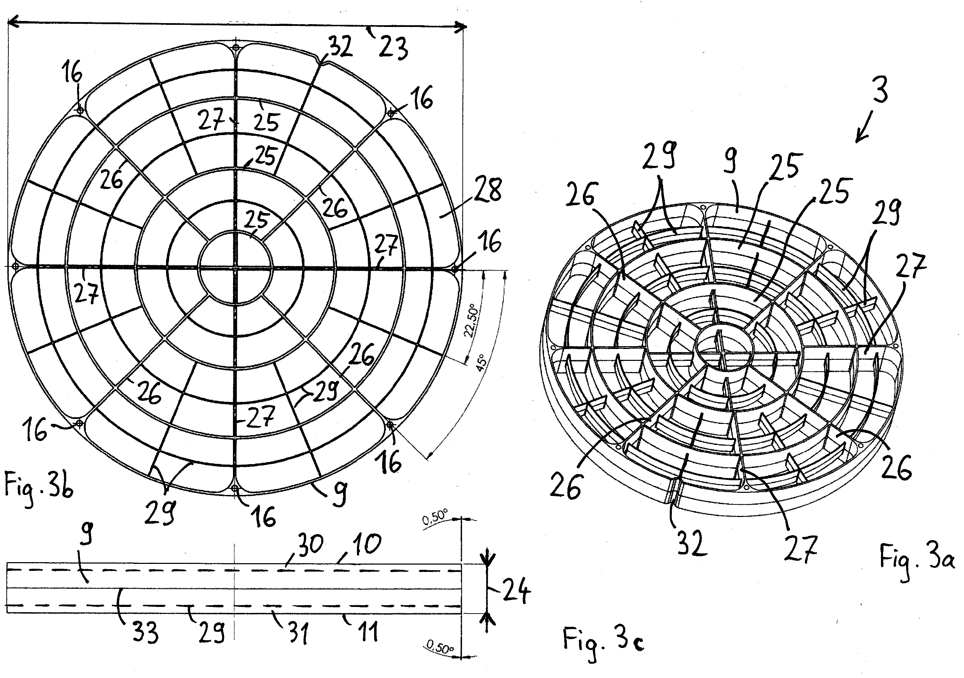

In den Fig. 3a bis 3c ist eine Ausführungsform der Filterkassette 3 gezeigt, welche in der in Fig. 1 gezeigten Filtervorrichtung 1 verwendet werden kann. Die in Fig. 3a bis 3c gezeigte Ausgestaltung ist jedoch keineswegs zwingend, es können auch anders ausgestaltete Filterkassetten in der Filtervorrichtung 1 von Fig. 1 eingesetzt werden. Fig. 3a zeigt eine Schrägbildansicht, Fig. 3b eine Draufsicht und Fig. 3c eine Seitenansicht der Filterkassette 3. Dabei ist die Filterkassette 3 an beiden Stirnflächen 10 und 11 mit einem gasdurchlässigen Abdeckmaterial versehen. Um das Innere der Filterkassette 3 erkennbar zu machen, ist das Abdeckmaterial in den Fig. 3a bis 3c weggelassen.

Die in den Fig. 3a bis 3c gezeigte Filterkassette 3 ist als Scheibe ausgebildet und weist eine kreisförmige Grundfläche auf, die von einem gasundurchlässigen Rand 9 umschlossen ist. Dabei ist der Durchmesser 23 der Filterkassette 3 größer als die Höhe 24 der Filterkassette 3. Das Filtermaterial ist im Inneren der Filterkassette 3 zwischen den beiden Stirnflächen 10 und 11 angeordnet. Dabei wird das Innere der Filterkassette 3 durch eine Mehrzahl von Trennwänden 25-27 in eine Vielzahl von Abteilungen 28 unterteilt, wobei das Filtermaterial innerhalb der Abteilungen 28 angeordnet ist. Jede der Trennwände 25-27 erstreckt sich von der ersten Stirnfläche 10 zur zweiten Stirnfläche 11 über die gesamte Höhe 24 der Filterkassette 3, so dass jede der so gebildeten Abteilungen 28 an allen Seiten von Trennwänden umschlossen ist und zudem an den Stirnflächen 10 und 11 durch das Abdeckmaterial abgedeckt wird. Jede der Abteilungen 28 wird von dem zu reinigenden Gas durchströmt, so dass das innerhalb der Abteilungen 28 angeordnete Filtermaterial Verunreinigungen des durchströmenden Gases absorbieren kann. Hierzu sind die Trennwände 25-27 in der Richtung des durchströmenden Gases ausgerichtet, so dass sie dem hindurchströmenden Gas möglichst wenig Widerstand entgegensetzen. Wenn die in Fig. 3b gezeigten Trennwände 25-27 in Richtung senkrecht zur Zeichenebene mit zu filterndem Gas durchströmt werden, dann setzen die in Richtung des durchströmenden Gases ausgerichteten Trennwände 25-27 dem durchströmenden Gas infolge ihrer Ausrichtung nur einen sehr geringen Widerstand entgegen. Dadurch wird jede der Abteilungen 28 gleichmäßig von dem zu reinigenden Gas durchströmt.

Bei dem in den Fig. 3a bis 3c gezeigten Beispiel einer Filterkassette 3 umfassen die Trennwände eine Mehrzahl von ringförmig umlaufenden Trennwänden 25. Darüber hinaus umfassen die Trennwände eine Mehrzahl von sich radial nach außen erstreckenden Trennwänden 26 und 27, die den Innenbereich bzw. Teile des Innenbereichs der Filterkassette 3 in eine Mehrzahl von Sektoren unterteilen. Dabei erstrecken sich die Trennwände 26 von der ersten der ringförmig umlaufenden Trennwände 25 aus radial nach außen bis hin zum Rand 9. Die Trennwände 27 erstrecken sich von der zweiten der ringförmig umlaufenden Trennwände 25 aus in radialer Richtung bis zum Rand 9. Durch eine derartige Unterteilung des Innenbereichs der Filterkassette 3 wird erreicht, dass die unterschiedlichen Abteilungen 28 alle eine vergleichbare Größe aufweisen.

Als Filtermaterial für die Filterkassette 3 kann beispielsweise Aktivkohle oder Kokosnussschale von unterschiedlicher Partikelgröße verwendet werden. Beispielsweise kann Aktivkohle mit einer durchschnittlichen Partikelgröße im Bereich von 0,5 mm bis 5 mm, weiter vorzugsweise im Bereich von 2 mm bis 4 mm eingesetzt werden.

Durch die Unterteilung des Innenraums der Filterkassette 3 in unterschiedliche Abteilungen 28 wird dabei erreicht, dass das Filtermaterial gleichmäßig über den gesamten Querschnitt der Filterkassette 3 hinweg angeordnet ist. Dabei wird durch die Trennwände 25-27 verhindert, dass sich das Filtermaterial bei vertikaler oder schräger Anordnung der Filterkassette 3 infolge der Schwerkraft im unteren Bereich der Filterkassette 3 ansammelt, so dass sich im obersten Bereich der Filterkassette 3 ein freier Bereich ausbildet, der nicht mit Filtermaterial befüllt ist und somit von dem zu reinigenden Gas durchströmt werden könnte. Durch die Trennwände 25-27 wird also gewährleistet, dass über die gesamte Stirnfläche der Filterkassette 3 hinweg eine gleichmäßige Beladung mit Filtermaterial vorhanden ist und dass sich keine von Filtermaterial freien Stellen ausbilden, durch die das Gas ungefiltert hindurchströmen könnte.

Um das innerhalb jeder Abteilung 28 befindliche Filtermaterial darüber hinaus noch weiter zu fixieren, können innerhalb jeder Abteilung 28 zusätzlich Trennstege 29 angeordnet sein. Im Unterschied zu den Trennwänden 25-27, die sich über die gesamte Höhe 24 der Filterkassette 3 erstrecken, erstrecken sich die Trennstege 29 nur über einen Teil der Höhe 24 der Filterkassette 3 und erstrecken sich somit nicht über die gesamte Höhe 24 von der ersten Stirnfläche 10 zur zweiten Stirnfläche 11 der Filterkassette 3. Vielmehr ist zwischen dem Trennsteg 29 und der ersten Stirnfläche 10 ein erster Freiraum 30 vorgesehen und zwischen dem Trennsteg 29 und der zweiten Stirnfläche 11 ist ein zweiter Freiraum 31 vorgesehen.

Durch das Belassen von Freiräumen 30, 31 in den Bereichen der Abteilung 28 nahe den Stirnflächen 10 und 11 wird erreicht, dass entlang der jeweiligen Stirnfläche 10 oder 11 oberhalb und unterhalb der Trennstege 29 das Filtermaterial jeweils durchgehend angeordnet ist. Indem die Trennstege 29 also nicht bis zu den Stirnflächen 10 und 11 hin reichen, sondern bereits vorher enden, wird erreicht, dass entlang der Stirnflächen 10 und 11 trotz des Vorhandenseins der fixierenden Trennstege 29 eine durchgehende Schicht von Filtermaterial angeordnet ist. Durch diese durchgehende Anordnung des Filtermaterials entlang der Stirnflächen bzw. entlang des an den Stirnflächen angebrachten Abdeckmaterials wird insbesondere die Entstehung von Hohlräumen und Zwischenräumen zwischen den Filterpartikeln verhindert, welche ein ungehindertes Durchströmen des zu filternden Gases erlauben würden und somit die Filterwirkung der Filterkassette 3 herabsetzen könnten. Indem die Trennstege 29 absichtlich nicht bis hin zu den Stirnflächen 10 und 11 geführt werden, wird insofern eine vollständigere und verbesserte Filterwirkung der Filterkassette 3 für das durchströmende Gas erzielt. Nichtsdestotrotz bewirken auch die schmäleren Trennstege 29 eine Fixierung des Filtermaterials innerhalb der jeweiligen Abteilung 28, so dass verhindert wird, dass das Filtermaterial innerhalb der Abteilung 28 schwerkraftbedingt zu einer Seite hin abrutscht und somit einen Freiraum innerhalb der Abteilung 28 für das durchströmende Gas schafft, durch den das Gas ungefiltert durchströmen könnte. Durch die Kombination von Trennwänden 25-27 und Trennstegen 29 wird daher die Entstehung von Freiräumen im jeweiligen Filtergranulat bestmöglich verhindert, so dass eine effektive Filterung des Gasstroms erzielt wird.

Zur Befüllung der Filterkassette 3 mit Filtermaterial wird zunächst ein Zuschnitt des Abdeckmaterials auf die erste Stirnfläche 10 der Filterkassette 3 aufgelegt und mit dieser ersten Stirnfläche 10 verschweißt oder verklebt. Beispielsweise kann es sich bei dem Abdeckmaterial um ein Vliesmaterial aus Polymerfasern handeln, welches mittels einer Heizvorrichtung auf die Stirnfläche thermisch aufgeschweißt werden kann. Dabei ist es von Vorteil, wenn das Abdeckmaterial an allen Seiten um einige Millimeter hervorsteht, so dass die Kante des Randes 9 vom Abdeckmaterial überdeckt wird. Nachdem auf die erste Stirnfläche 10 der Filterkassette 3 ein entsprechendes Abdeckmaterial aufgebracht ist, werden die Abteilungen 28 der Filterkassette mit Filtermaterial befüllt, das Filtermaterial wird eingerüttelt und anschließend wird auf die zweite Stirnfläche 11 ein entsprechender Zuschnitt von Abdeckmaterial aufgebracht. Vorzugsweise handelt es sich bei dem Abdeckmaterial wieder um ein Vliesmaterial aus Polymerfasern, und vorzugsweise wird das Vliesmaterial durch thermisches Aufschweißen auf die zweite Stirnfläche 11 der Filterkassette 3 aufgebracht.

In den Fig. 3a und 3b ist zu erkennen, dass im Bereich des Randes 9 der Filterkassette 3 eine Mehrzahl von Schraublöchern 16 angeordnet ist, die sich in axialer Richtung durch die Filterkassette 3 hindurch erstrecken und zur Verschraubung der Filterkassette 3 mit dem trichterförmigen Halterungsteil 2 dienen. Darüber hinaus ist am Rand 9 der Filterkassette 3 eine Positionierrille 32 zu erkennen. Beim Einsetzen der Filterkassette 3 in die Aufnahme 4 greift die Positioniernase 22 in die Positionierrille 32 ein, so dass die Filterkassette 3 nur in einer bestimmten vorgegebenen Orientierung in die Aufnahme 4 einsetzbar ist.

In Fig. 3c ist die Filterkassette 3 in einer Seitenansicht gezeigt, in der der Rand 9 der Filterkassette, die erste Stirnfläche 10 und die zweite Stirnfläche 11 eingezeichnet sind. Außerdem sind die Trennstege 29 mittels gestrichelter Linien eingezeichnet. Es ist zu erkennen, dass sich die Trennstege 29 nicht vollständig von einer Stirnfläche 10 zur gegenüberliegenden Stirnfläche 11 erstrecken, sondern dass jeweils ein erster Freiraum 30 zwischen den Trennstegen 29 und der ersten Stirnfläche 10 und ein zweiter Freiraum 31 zwischen den Trennstegen 29 und der zweiten Stirnfläche 11 vorgesehen sind, durch die hindurch das Filtermaterial durchgehend an den Stirnflächen 10 und 11 angeordnet ist. Alternativ zu den beidseitig vorgesehenen Freiräumen 30, 31 kann auch lediglich an einer Seite eines Trennstegs ein Freiraum vorgesehen sein.

Darüber hinaus ist in Fig. 3c zu erkennen, dass der Rand 9 der Filterkassette 3 von der Mitte 33 zu der ersten Stirnfläche 10 und zur zweiten Stirnfläche 11 hin jeweils geringfügig nach innen geneigt verläuft, beispielsweise um 0,5° nach innen geneigt. Daraus ergibt sich von der Mitte 33 aus sowohl in Richtung zur ersten Stirnfläche 10 hin als auch zur zweiten Stirnfläche 11 hin ein sich geringfügig konisch verjüngender Verlauf des Rands 9 der Filterkassette 3 zu beiden Stirnflächen 10 und 11 hin. Dadurch wird das Einsetzen der Filterkassette 3 in die Aufnahme 4 erleichtert. Da die umlaufenden Kanten der Stirnflächen 10 und 11 jeweils durch Abdeckmaterial überdeckt werden, wird das Abdeckmaterial an den Kanten beim Zusammenschrauben der Filtervorrichtung 1 zwischen der Filterkassette 3 und der Aufnahme 4 zusammengepresst, wodurch sich ein gasdichter Abschluss zwischen der Filterkassette 3 und der Aufnahme 4 ergibt.

Bei dem in den Fig. 3a bis 3c beschriebenen Beispiel war eine spezielle Ausgestaltung von Trennwänden und Trennstegen vorgesehen worden, die sich als besonders vorteilhaft erwiesen hat. Eine für die Filtervorrichtung geeignete Filterkassette 3 könnte aber beispielsweise auch ausschließlich mit Trennwänden und ohne zusätzliche Trennstege realisiert werden. Eine funktionsfähige Filterkassette könnte darüber hinaus auch mit völlig anders angeordneten Trennwänden als den in den Fig. 3a bis 3c gezeigten ausgebildet werden, beispielsweise mit einem regelmäßigen Raster von Trennwänden. Eine für die Filtervorrichtung geeignete Filterkassette 3 kann im Innenraum beliebige Unterteilungen aufweisen. Die Trennwände könnten auch völlig weggelassen werden.

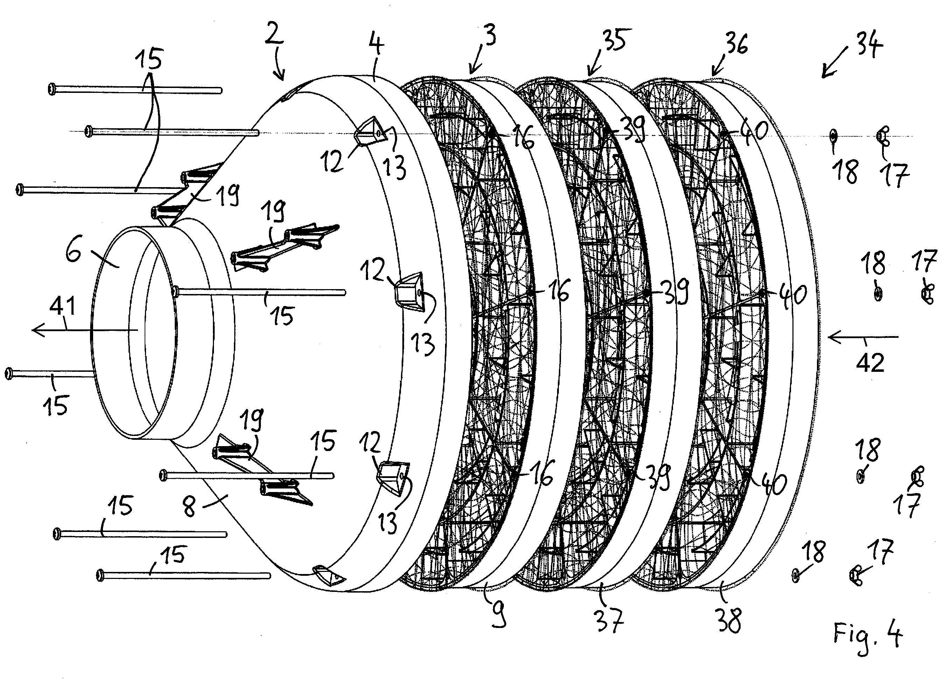

In Fig. 4 ist eine weitere Filtervorrichtung 34 gezeigt, die ein trichterförmiges Halterungsteil 2 sowie mehrere hintereinander angeordnete Filterkassetten 3, 35 und 36 umfasst. Dabei sind jeweils beide Stirnflächen der Filterkassetten 3, 35, 36 mit Abdeckmaterial versehen. Bei der Anordnung der Filterkassetten 3, 35, 36 liegt die Stirnfläche einer Filterkassette jeweils deckungsgleich auf der ihr zugewandten Stirnfläche der benachbarten Filterkassette auf. Auch die Ränder 9, 37, 38 der Filterkassetten liegen deckungsgleich aufeinander auf. Bei der Verschraubung der gesamten Filtervorrichtung 34 werden die Gewindeschrauben 15 durch die Schraublöcher 13 des trichterförmigen Halterungsteils 2 sowie durch die Schraublöcher 16, 39, 40 der drei Filterkassetten 3, 35, 36 geschoben und anschließend mittels der Flügelmuttern 17 verschraubt. Infolge dieser Verschraubung werden das trichterförmige Halterungsteil 2 und die drei Filterkassetten 3, 35, 36 in axialer Richtung so zusammengedrückt, dass die jeweiligen Abdeckmaterialschichten zwischen der Aufnahme 4 und den Rändern 9, 37, 38 zusammengedrückt werden und sich ein dichtender Abschluss zwischen der Aufnahme 4 und den Rändern 9, 37, 38 ergibt. Wenn nun am Anschluss 6 Luft oder ein anderes Gas in Richtung des Pfeils 41 abgesogen wird, dann durchströmt das anströmseitig in Richtung der Pfeile 42 angesogene Gas nacheinander die Filtermaterialien in den Filterkassetten 36, 35 und 3 und wird durch jede dieser Filterkassetten gefiltert. Durch die Hintereinanderschaltung von mehreren Filterkassetten wird eine intensivierte Filterung des angesogenen Gases bewirkt.

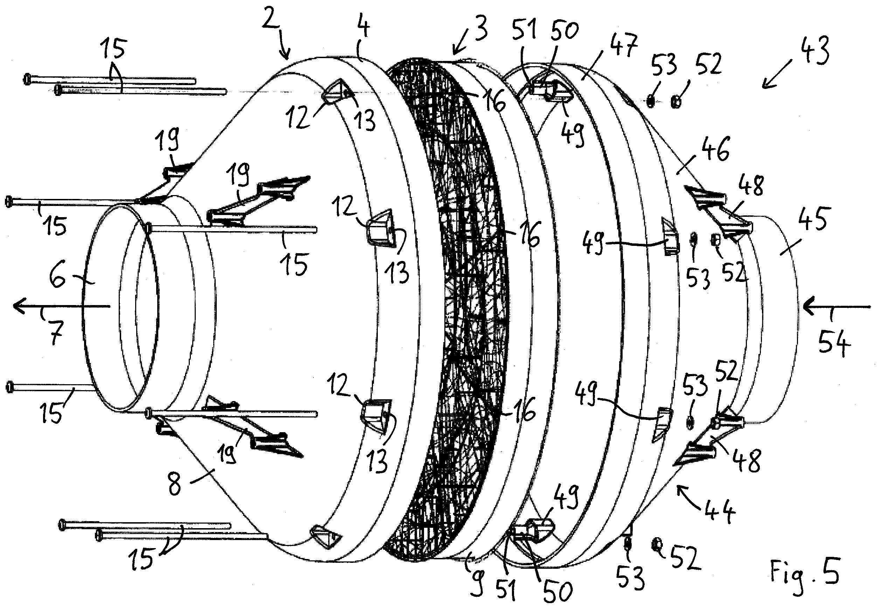

Fig. 5 zeigt eine als Inlinefilter ausgebildete Filtervorrichtung 43, welche zusätzlich zu dem trichterförmigen Halterungsteil 2 und der Filterkassette 3 ein weiteres trichterförmiges Halterungsteil 44 umfasst. Ebenso wie das trichterförmige Halterungsteil 2 weist auch das weitere trichterförmige Halterungsteil 44 einen Anschluss 45 für einen Schlauch oder ein Rohr auf, weitet sich ausgehend von dem Anschluss 45 im Bereich 46 trichterförmig nach außen auf und bildet eine Aufnahme 47 für die Filterkassette 3 aus. Dabei kann das weitere trichterförmige Halterungsteil 44 beispielsweise baugleich zum trichterförmigen Halterungsteil 2 ausgebildet sein, das trichterförmige Halterungsteil 44 kann aber auch eine vom trichterförmigen Halterungsteil 2 abweichende Form aufweisen.

Beim Zusammenbau der Filtervorrichtung 43 wird die Filterkassette 3 mit der Stirnfläche 10 voran in die Aufnahme 4 eingesetzt, so dass ein Teil des Randes 9 der Filterkassette 3 vom Randbereich der Aufnahme 4 umschlossen wird. Anschließend wird die Aufnahme 47 von der gegenüberliegenden Seite her so auf die Filterkassette 3 aufgesteckt, dass die Filterkassette 3 mit der Stirnfläche 11 voran in die Aufnahme 47 eingeschoben wird und der Randbereich der Aufnahme 47 einen Teil des Randes 9 der Filterkassette 3 umschließt. Auf diese Weise wird die Filterkassette 3 von beiden Seiten her durch die Aufnahmen 4, 47 der beiden trichterförmigen Halterungsteile 2, 44 gehaltert. Im Bereich 46 des trichterförmigen Halterungsteils 44 sind Abstandselemente 48 vorgesehen, die beim Einbau der Filtervorrichtung 43 in eine Einbauumgebung einen gewissen Mindestabstand zwischen der Filtervorrichtung 43 und der Einbauumgebung gewährleisten.

Anschließend werden das trichterförmige Halterungsteil 2, die Filterkassette 3 und das weitere trichterförmige Halterungsteil 44 miteinander verschraubt. Hierzu weist das weitere trichterförmige Halterungsteil 44 Einbuchtungen 49 auf, an die Schraubhülsen 50 für die Schraublöcher 51 angeformt sind. Zur Verschraubung werden Gewindeschrauben 15 durch die Schraublöcher 13, 16 und 51 hindurchgesteckt und mittels geeigneter Muttern 52 und Beilagscheiben 53 verschraubt. Dadurch werden das trichterförmige Halterungsteil 2 und das weitere trichterförmige Halterungsteil 44 von beiden Seiten her in axialer Richtung gegen die Filterkassette 3 gepresst. Da die Stirnflächen 10 und 11 der Filterkassette 3 jeweils mit einem Abdeckmaterial versehen sind, das über den Rand 9 hinaus leicht übersteht, wird das Abdeckmaterial beim Verschrauben der Filtervorrichtung 43 zwischen der Aufnahme 4 und dem Rand 9 bzw. zwischen dem Rand 9 und der Aufnahme 47 zusammengedrückt. Dadurch ergibt sich jeweils ein gasdichter Abschluss zwischen dem trichterförmigen Halterungsteil 2, der Filterkassette 3 und dem weiteren trichterförmigen Halterungsteil 44, so dass die gesamte Filtervorrichtung 43 vom Anschluss 45 bis zum Anschluss 6 mit dem zu reinigenden Gas bzw. der zu reinigenden Luft durchströmt werden kann.

Die Inline-Filtervorrichtung 43 kann beispielsweise am abströmseitigen Anschluss 6 mit einem Rohr oder einem Schlauch verbunden werden, um Luft oder ein anderes Gas in Richtung des Pfeils 7 abzusaugen. Hierzu kann der Anschluss 6 beispielsweise mit einem Gebläse oder einem Ventilator verbunden sein. Am anströmseitigen Anschluss 45 ist die Inline-Filtervorrichtung 43 mit einem Schlauch oder einem Rohr verbunden, über das der Inline-Filtervorrichtung 43 ein zu reinigendes Gas in Richtung des Pfeils 54 zugeführt werden kann. Auf diese Weise ergibt sich ein Strom des zu filternden Gases durch die Inline-Filtervorrichtung 43. Dabei wird der Strom des zu filternden Gases durch das trichterförmige Halterungsteil 44 zunächst aufgeweitet und durchdringt dann die etwa senkrecht zum Gasstrom angeordnete Filterkassette 3. Dabei ist der Durchmesser der Filterkassette 3 deutlich höher als der Durchmesser am Anschluss 45, so dass der aufgeweitete Luftstrom die vergleichsweise große zweite Stirnfläche 11 der in etwa senkrecht zum Luftstrom angeordneten Filterkassette 3 durchdringt und dabei gefiltert wird. Die Aufweitung des Gasstroms im trichterförmigen Halterungsteil 44 hat dabei zum einen den Vorteil, dass die Strömungsgeschwindigkeit des zu filternden Gases im Bereich der Filterkassette 3 deutlich abgesenkt wird, so dass das zu filternde Gas das Filtermaterial mit vergleichsweise langsamer Strömungsgeschwindigkeit passiert, so dass für die Adsorption von Verunreinigungen an den Filterpartikeln genügend Zeit zur Verfügung steht. Ein weiterer Vorteil ist, dass der zu filternde Gasstrom durch eine große Stirnfläche hindurchtritt, so dass infolge der großen Querschnittsfläche pro Flächeneinheit nur eine vergleichsweise geringe Menge an Verunreinigungen adsorbiert werden muss. Dadurch wird die Schadstoffadsorption auf eine vergleichsweise große Querschnittsfläche verteilt, so dass das Filtermaterial pro Flächeneinheit nur vergleichsweise wenig Schmutz adsorbieren muss. Die Beladung des Filtermaterials pro Flächeneinheit wird auf diese Weise verringert. Im Ergebnis muss die Filterkassette 3 der Inline-Filtervorrichtung 43 nur vergleichsweise selten ausgewechselt werden und somit wird eine lange Nutzungsdauer ermöglicht.

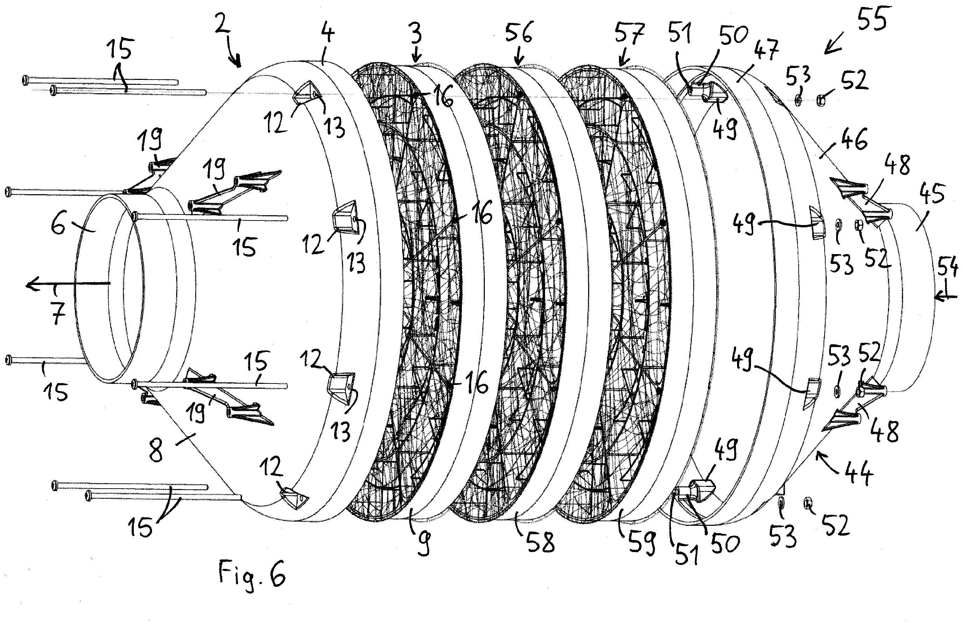

Zur Intensivierung der Filterwirkung können zwischen dem trichterförmigen Halterungsteil 2 und dem weiteren trichterförmigen Halterungsteil 44 auch mehrere hintereinander angeordnete Filterkassetten eingefügt werden. Eine derartige Filtervorrichtung 55 ist in Fig. 6 gezeigt.

In der Filtervorrichtung 55 sind zwischen dem trichterförmigen Halterungsteil 2 und dem weiteren trichterförmigen Halterungsteil 44 insgesamt drei Filterkassetten 3, 56, 57 hintereinander angeordnet, wobei benachbarte Filterkassetten mit ihren Stirnflächen aufeinander liegen. Beim Verschrauben der Filtervorrichtung 55 mittels der Gewindeschrauben 15, der zugehörigen Muttern 52 und der Beilagscheiben 53 werden die drei Filterkassetten 3, 56, 57 zwischen den beiden trichterförmigen Halterungsteilen 2, 44 in axialer Richtung zusammengedrückt. Dadurch wird jeweils ein gasdichter Abschluss zwischen der Aufnahme 4, den Rändern 58, 59 und der Aufnahme 47 ausgebildet. Ein zu filterndes Gas strömt in Richtung des Pfeils 54 durch den Anschluss 45 und anschließend durch die drei hintereinander angeordneten Filterkassetten 57, 56 und 3, wobei das zu filternde Gas beim Durchtritt durch jede der Filterkassetten weiter gereinigt wird, so dass durch die Bereitstellung mehrerer Filterstufen die Intensität der Filterung des Gases erhöht wird. Das gefilterte Gas tritt dann in Richtung des Pfeils 7 aus dem Anschluss 6 aus.

### Bezugszeichenliste

- 1: Filtervorrichtung
- 2: trichterförmiges Halterungsteil
- 3: Filterkassette
- 4: Aufnahme für Filterkassette
- 5: axiale Symmetrieachse
- 6: Anschluss
- 7: Saugrichtung
- 8: Bereich des trichterförmigen Halterungsteils
- 9: Rand der Filterkassette
- 10: erste Stirnfläche der Filterkassette
- 11: zweite Stirnfläche der Filterkassette
- 12: Einbuchtungen
- 13: Schraublöcher des trichterförmigen Halterungsteils
- 14: Abstand
- 15: Gewindeschrauben
- 16: Schraublöcher der Filterkassette
- 17: Flügelmuttern
- 18: Beilagscheiben
- 19: Abstandselemente
- 20: Schraubhülsen
- 21: Auflagestufe
- 22: Positioniernase
- 23: Durchmesser der Filterkassette
- 24: Höhe der Filterkassette
- 25: ringförmig umlaufende Trennwände
- 26: radial verlaufende Trennwände
- 27: radial verlaufende Trennwände
- 28: Abteilungen
- 29: Trennstege
- 30: erster Freiraum
- 31: zweiter Freiraum
- 32: Positionierrille
- 33: Mitte des Randes
- 34: Filtervorrichtung
- 35: zweite Filterkassette
- 36: dritte Filterkassette
- 37: Rand der zweiten Filterkassette
- 38: Rand der dritten Filterkassette
- 39: Schraublöcher der zweiten Filterkassette
- 40: Schraublöcher der dritten Filterkassette
- 41: Ansaugrichtung
- 42: Richtung der einströmenden Luft
- 43: Filtervorrichtung
- 44: weiteres trichterförmiges Halterungsteil
- 45: Anschluss
- 46: Bereich des trichterförmigen Halterungsteils
- 47: Aufnahme für Filterkassette
- 48: Abstandselemente
- 49: Einbuchtungen
- 50: Schraubhülsen
- 51: Schraublöcher
- 52: Muttern
- 53: Beilagscheiben
- 54: Pfeil
- 55: Filtervorrichtung
- 56: zweite Filterkassette
- 57: dritte Filterkassette
- 58: Rand der zweiten Filterkassette
- 59: Rand der dritten Filterkassette

## Patentansprüche

1. Eine Filtervorrichtung (1, 34, 43, 55), welche aufweist
- eine Filterkassette (3), welche eine zumindest teilweise gasdurchlässige erste Stirnfläche (10), eine gegenüberliegende zumindest teilweise gasdurchlässige zweite Stirnfläche (11) sowie eine umlaufende Randwandung (9) aufweist, wobei innerhalb der Filterkassette (3) Filtermaterial angeordnet ist,
- ein trichterförmiges Halterungsteil (2), welches einen Anschluss (6) zur Zuführung oder Abführung von Gas aufweist, wobei sich eine Wandung des Halterungsteils (2) von dem Anschluss (6) ausgehend in axialer Richtung trichterförmig aufweitet und eine Aufnahme (4) für die Filterkassette (3) bildet, wobei die Filterkassette (3) in die Aufnahme (4) eingesetzt ist und wobei die Filterkassette (3) durch die Aufnahme (4) ringsum gehaltert ist,
**dadurch gekennzeichnet, dass**
- die Randwandung (9) der Filterkassette (3) ringsum von einem Randbereich der Aufnahme (4) umschlossen und gehaltert ist, und
- dass die Filterkassette (3) mittels mindestens eines Befestigungselements in axialer Richtung so gegen die Aufnahme (4) des trichterförmigen Halterungsteils (2) anpressbar ist, dass zwischen der Aufnahme (4) und der Randwandung (9) der Filterkassette (3) eine im Wesentlichen gasdichte Abdichtung ausbildbar ist,

2. Eine Filtervorrichtung nach Anspruch 1, **gekennzeichnet durch** mindestens eines von folgenden:
der Durchmesser der Aufnahme für die Filterkassette ist um einen Faktor 2 bis 5 mal größer als der Durchmesser des Anschlusses;
die Querschnittsläche der Aufnahme für die Filterkassette ist 5 bis 15 mal größer als die Querschnittsfläche des Anschlusses.

3. Eine Filtervorrichtung nach Anspruch 1 oder Anspruch 2, **dadurch gekennzeichnet, dass** die Innenkontur der Aufnahme der Außenkontur eines Randes der Filterkassette entspricht.

4. Eine Filtervorrichtung nach einem der Ansprüche 1 bis 3, **dadurch gekennzeichnet, dass** die eingesetzte Filterkassette rundum von einem Randbereich des trichterförmigen Halterungsteils umgeben ist.

5. Eine Filtervorrichtung nach einem der Ansprüche 1 bis 4, **dadurch gekennzeichnet, dass** sich die umlaufende Randwandung vom Rand der ersten Stirnfläche zum Rand der zweiten Stirnfläche erstreckt.

6. Eine Filtervorrichtung nach einem der Ansprüche 1 bis 5, **dadurch gekennzeichnet, dass** die Randwandung der Filterkassette in der Aufnahme so gehaltert ist, dass die Stirnflächen der Filterkassette im Wesentlichen senkrecht zu einer Gasströmung durch die Filtervorrichtung stehen.

7. Eine Filtervorrichtung nach einem der Ansprüche 1 bis 6, **dadurch gekennzeichnet, dass** an mindestens einer von der ersten und der zweiten Stirnfläche der Filterkassette ein gasdurchlässiges Abdeckmaterial angebracht ist, das das Filtermaterial innerhalb der Filterkassette hält.

8. Eine Filtervorrichtung nach einem der Ansprüche 1 bis 7, **dadurch gekennzeichnet**, daas die Filtervorrichtung ein zweites trichterförmiges Halterungsteil umfasst, welches einen zweiten Anschluss zur Zuführung oder Abführung von Gas aufweist, wobei sich eine Wandung des zweiten trichterförmigen Halterungsteils von dem zweiten Anschluss ausgehend in axialer Richtung trichterförmig aufweitet und eine zweite Aufnahme für die Filterkassette bildet.

9. Eine Filtervorrichtung nach einem der Ansprüche 1 bis 8, **dadurch gekennzeichnet, dass** die Filtervorrichtung zusätzlich zu der Filterkassette eine oder mehrere weitere Filterkassetten aufweist, wobei die Filterkassetten gestapelt angeordnet sind, wobei eine Stirnfläche einer Filterkassette jeweils auf einer Stirnfläche einer benachbarten Filterkassette aufliegt.

10. Verfahren zur Montage einer Filtervorrichtung (1, 34, 43, 55) ausgehend von einer Filterkassette (3), wobei innerhalb der Filterkassette (3) Filtermaterial angeordnet ist, und ausgehend von einem trichterförmigen Halterungsteil (2), welches einen Anschluss (6) zur Zuführung oder Abführung von Gas aufweist, wobei sich eine Wandung des Halterungsteils (2) von dem Anschluss (6) ausgehend in axialer Richtung trichterförmig aufweitet und eine Aufnahme (4) für die Filterkassette (3) bildet, wobei das Verfahren umfasst:
- Einsetzen einer Filterkassette (3) in die Aufnahme (4) des trichterförmigen Halterungsteils (2), wobei die Filterkassette (3) eine zumindest teilweise gasdurchlässige erste Stirnfläche (10), eine gegenüberliegende zumindest teilweise gasdurchlässige zweite Stirnfläche (11) sowie eine umlaufende Randwandung (9) aufweist und die Randwandung (9) der Filterkassette (3) ringsum von einem Randbereich der Aufnahme (4) umschlossen und gehaltert wird, und
- Fixieren der Filterkassette (3) in der Aufnahme (4) des trichterförmigen Halterungsteils (2), wobei die Filterkassette (3) mittels mindestens eines Befestigungselements in axialer Richtung so gegen die Aufnahme (4) des trichterförmigen Halterungsteils (2) angepresst wird, dass zwischen der Aufnahme (4) und der Randwandung (9) der Filterkassette (3) eine im Wesentlichen gasdichte Abdichtung ausgebildet wird.

## Claims

1. A filter device (1, 34, 43, 55) comprising
- a filter cassette (3) including an at least partly gas-permeable first face (10), an opposing, at least partly gas-permeable second face (11), as well as a circumferential edge wall (9), a filter material being disposed within the filter cassette (3),
- a funnel-shaped holder part (2) including a connection (6) for supplying or discharging gas, wherein a wall of the holder part (2) widens in a funnel shape in an axial direction starting from the connection (6) and forms a receptacle (4) for the filter cassette (3), wherein the filter cassette (3) is inserted in the receptacle (4) and wherein the filter cassette (3) is circumferentially retained by the receptacle (4),
**characterised in that**
- the edge wall (9) of the filter cassette (3) is circumferentially enclosed and retained by a peripheral area of the receptacle (4), and
- the filter cassette (3) can be pressed against the receptacle (4) of the funnel-shaped holder part (2) in the axial direction by means of at least one fastening member so that a substantially gas-tight sealing can be formed between the receptacle (4) and the edge wall (9) of the filter cassette (3).

2. A filter device according to claim 1, **characterised by** at least one of the following:
the diameter of the receptacle for the filter cassette is larger than the diameter of the connection by a factor of 2 to 5 times;
the cross-sectional area of the receptacle for the filter cassette is 5 to 15 times larger than the cross-sectional area of the connection.

3. A filter device according to claim 1 or claim 2, **characterised in that** the inner contour of the receptacle corresponds to the outer contour of an edge of the filter cassette.

4. A filter device according to one of the claims 1 to 3, **characterised in that** the inserted filter cassette is circumferentially surrounded by a peripheral area of the funnel-shaped holder part.

5. A filter device according to one of the claims 1 to 4, **characterised in that** the circumferential edge wall extends from the edge of the first face to the edge of the second face.

6. A filter device according to one of the claims 1 to 5, **characterised in that** the edge wall of the filter cassette is retained in the receptacle so that the faces of the filter cassette stand substantially perpendicular to a gas flow through the filter device.

7. A filter device according to one of the claims 1 to 6, **characterised in that** a gas-permeable cover material retaining the filter material within the filter cassette is attached to least one of the first and the second face of the filter cassette.

8. A filter device according to one of the claims 1 to 7, **characterised in that** the filter device comprises a second funnel-shaped holder part including a second connection for supplying or discharging gas, wherein a wall of the second funnel-shaped holder part widens in a funnel form in an axial direction starting from the second connection and forms a second receptacle for the filter cassette.

9. A filter device according to one of the claims 1 to 8, **characterised in that**, in addition to the filter cassette, the filter device includes one or more additional filter cassettes, the filter cassettes being arranged so as to be stacked, a face of a filter cassette respectively abutting on a face of an adjacent filter cassette.

10. A method for mounting a filter device (1, 34, 43, 55) building on a filter cassette (3), a filter material being disposed within the filter cassette (3), and building on a funnel-shaped holder part (2) including a connection (6) for supplying or discharging gas, wherein a wall of the holder part (2) widens in a funnel form in an axial direction starting from the connection (6) and forms a receptacle (4) for the filter cassette (3), the method comprising:
- inserting a filter cassette (3) into the receptacle (4) of the funnel-shaped holder part (2), wherein the filter cassette (3) includes an at least partly gas-permeable first face (10), an opposing, at least partly gas-permeable second face (11), as well as a circumferential edge wall (9), and the edge wall (9) of the filter cassette (3) is circumferentially enclosed and retained by a peripheral area of the receptacle (4), and
- fixing the filter cassette [3) in the receptacle (4) of the funnel-shaped holder part (2), wherein the filter cassette (3) is pressed against the receptacle (4) of the funnel-shaped holder part (2) in an axial direction by means of at least one fastening member so that a substantially gas-tight sealing is formed between the receptacle (4) and the edge wall (9) of the filter cassette (3).

## Revendications

1. Dispositif de filtre (1, 34, 43, 55), présentant :
- une cassette filtrante (3) qui présente une première surface frontale (10) au moins partiellement perméable au gaz, une deuxième surface frontale (11) opposée au moins partiellement perméable au gaz ainsi qu'une paroi périphérique de bordure (9), de la matière filtrante étant agencée au sein de la cassette filtrante (3),
- une partie de support en forme d'entonnoir (2) présentant un raccord (6) pour l'entrée ou la sortie de gaz, une paroi de la partie de support (2) s'évasant dans la direction axiale en forme d'entonnoir à partir du raccord (6) et formant un logement (4) pour la cassette filtrante (3), la cassette filtrante (3) étant insérée dans le logement (4) et la cassette filtrante (3) étant maintenue tout autour par le logement (4),
**caractérisé en ce que**
- la paroi de bordure (9) de la cassette filtrante (3) est entourée et maintenue tout autour par une zone de bordure du logement (4) et
- que la cassette filtrante (3) est serrable dans la direction axiale contre le logement (4) de la partie de support en forme d'entonnoir (2) moyennant au moins un élément de fixation de sorte qu'un étanchement essentiellement imperméable au gaz peut être formé entre le logement (4) et la paroi de bordure (9) de la cassette filtrante (3).

2. Dispositif de filtre selon la revendication 1, **caractérisé par** au moins un des suivants :
le diamètre du logement pour la cassette filtrante est supérieur au diamètre du raccord d'un facteur de 2 à 5 ;
la surface de la section transversale du logement pour la cassette filtrante est supérieure à la surface de la section transversale du raccord d'un facteur de 5 à 15.

3. Dispositif de filtre selon la revendication 1 ou la revendication 2, **caractérisé en ce que** le contour intérieur du logement correspond au contour extérieur d'une bordure de la cassette filtrante.

4. Dispositif de filtre selon l'une des revendications 1 à 3, **caractérisé en ce que** la cassette filtrante insérée est entourée tout autour d'une zone de bordure de la partie de support en forme d'entonnoir.

5. Dispositif de filtre selon l'une des revendications 1 à 4, **caractérisé en ce que** la paroi périphérique de bordure s'étend de la bordure de la première surface frontale à la bordure de la deuxième surface frontale.

6. Dispositif de filtre selon l'une des revendications 1 à 5, **caractérisé en ce que** la paroi périphérique de bordure de la cassette filtrante est maintenue dans le logement de sorte que les surfaces frontales de la cassette filtrante sont essentiellement orthogonales par rapport à un flux de gaz passant par le dispositif de filtre.

7. Dispositif de filtre selon l'une des revendications 1 à 6, **caractérisé en ce qu'**un matériau de recouvrement perméable au gaz maintenant la matière filtrante au sein de la cassette filtrante est agencé sur au moins l'une de la première et de la deuxième surface frontale de la cassette filtrante.

8. Dispositif de filtre selon l'une des revendications 1 à 7, **caractérisé en ce que** le dispositif de filtre comprend une deuxième partie de support en forme d'entonnoir qui présente un deuxième raccord pour l'entrée ou la sortie de gaz, une paroi de la deuxième partie de support en forme d'entonnoir s'évasant dans la direction axiale en forme d'entonnoir à partir du deuxième raccord et forme un deuxième logement pour la cassette filtrante.

9. Dispositif de filtre selon l'une des revendications 1 à 8, **caractérisé en ce que** le dispositif de filtre présente, en plus de la cassette filtrante, une ou plusieurs cassette(s) filtrante(s) supplémentaire(s), les cassettes filtrantes étant agencées de manière superposée, une surface frontale d'une cassette filtrante reposant respectivement sur une surface frontale d'une cassette filtrante adjacente.

10. Procédé pour le montage d'un dispositif de filtre (1, 34, 43, 55) à partir d'une cassette filtrante (3), de la matière filtrante étant agencée au sein de la cassette filtrante (3), et à partir d'une partie de support en forme d'entonnoir (2) présentant un raccord (6) pour l'entrée ou la sortie de gaz, une paroi de la partie de support (2) s'évasant dans la direction axiale en forme d'entonnoir à partir du raccord (6) et formant un logement (4) pour la cassette filtrante (3), le procédé comprenant :
- insérer une cassette filtrante (3) dans le logement (4) de la partie de support en forme d'entonnoir (2), la cassette filtrante (3) présentant une première surface frontale (10) au moins partiellement perméable au gaz, une deuxième surface frontale (11) opposée au moins partiellement perméable au gaz ainsi qu'une paroi périphérique de bordure (9) et ladite paroi de bordure (9) de la cassette filtrante (3) étant entourée et maintenue tout autour par une zone de bordure du logement (4) et
- fixer la cassette filtrante (3) dans le logement (4) de la partie de support en forme d'entonnoir (2), la cassette filtrante (3) étant serrée moyennant au moins un élément de fixation dans la direction axiale contre le logement (4) de la partie de support en forme d'entonnoir (2) de sorte à former un étanchement essentiellement imperméable au gaz entre le logement (4) et la paroi de bordure (9) de la cassette filtrante (3).
